# EUROPEAN PATENT APPLICATION

(11) **EP 4 741 081 A1**
(43) Date of publication of application: **13.05.2026**
(21) Application number: 24211479.1
(22) Date of filing: 07.11.2024
(51) Int. Cl.: B22F 5/10, B22F 10/18, B22F 10/25, B22F 10/28, B23K 9/04, B33Y 10/00, B33Y 80/00

(54) **IMPROVED WELDING METHOD AND DEVICE OBTAINABLE THEREFROM**

(71) Applicant: Guaranteed, 9060 Zelzate (BE)
(72) Inventor: Antonissen, Joachim, 9060 Zelzate (BE); Debel, Michiel, 9060 Zelzate (BE)
(74) Representative: Patentales BV

(57) **Abstract**

The invention provides, amongst other aspects, a welding method comprising: providing a support structure; depositing an additive manufacturing layer on the support structure, wherein the step of providing a support structure comprises fabricating the support structure using a high-accuracy additive manufacturing technology, and wherein the additive manufacturing layer is deposited using a high-deposition-rate additive manufacturing technology. The invention further provides a device obtainable by the method according to the present invention.

## Description

### Field of the invention

The present invention relates to the technical domain of additive manufacturing, such as three-dimensional (3D) printing or welding, of conformal channels. For instance, the present invention relates to a method of using additive manufacturing technologies, e.g., directed energy deposition (DED) based technologies, such as using wire, possibly in combination with powder-based technologies and/or cold-spray technologies and/or other additive manufacturing technologies, to repair and/or manufacture parts, such as slow-moving parts or molds, with conformal channels.

### Background art

Traditional methods for fabricating metal structures often struggle to meet the demands of intricate and complex designs. Methods like casting, forging, and subtractive machining (e.g., milling, turning) can be highly inefficient for complex geometries, requiring extensive post-processing steps such as machining. These processes can also introduce limitations in achieving high-quality complex shapes, while ensuring their structural integrity, often leading to reduced surface finish, potential imperfections, and overall performance compromises. The inherent complexity of design and fabrication often restricts the applicability of these traditional methods to simpler structures. For instance, in the case of machining, the geometric freedom of internal cavities is limited by the possibilities of the process to enter into them with a machining tool.

Recent technologies, such as directed energy deposition (DED), allow the fabrication of complex structure, however, to a certain extent without affecting the productivity and quality of the fabricated structure. For instance, particular complex structures, such as overhangs, may pose a significant challenge for such technologies to ensure the desired productivity and quality of the fabricated structure. Such technologies may suffer from overfilling of material which can lead to excess material needing removal, which in some cases may be difficult or even impossible without compromising the integrity of the structure, or may suffer from underfilling of material which can result in gaps or weak points, which compromises the quality of the fabricated structure.

Currently, fabricating complex metal structures can be performed by metal powder-based technologies, such as by powder bed laser melting. For example, US9643281B1 describes a process of forming a metal part from metal powder using laser to melt the metal powder. However, metal powder-based technologies are time consuming and limited to a few powder materials suitable for such technologies, which are limited in size of the structures that can be produced, while also being expensive, which restricts further the application range. Furthermore, powder-based technologies may be limited by the variety of materials which can be used and/or by the inherent porosity of such materials which may result in a deterioration of the thermal conductivity of the printed part. When fabricating complex geometries, non-molten powder (i.e., powder which has not melted) needs to be evacuated after the printing process. This requirement prevents the fabrication of particular complex geometries, such as enclosed cavities or even recessed cavities with small dimensions, since the non-molten powder cannot be removed without compromising the integrity of the fabricated structure.

These challenges highlight the need for improved welded manufacturing methods and improved devices obtainable therefrom that can overcome these limitations.

The present invention aims at addressing issues, such as the issues mentioned above.

### Summary of the invention

According to a first aspect, the present invention provides a welded manufacturing method comprising: providing a support structure; depositing an additive manufacturing layer on the support structure, wherein the step of providing a support structure comprises fabricating the support structure using a high-accuracy additive manufacturing technology, and wherein the additive manufacturing layer is deposited using a high-deposition-rate additive manufacturing technology.

The present invention advantageously provides a combination of a high-accuracy additive manufacturing technology for providing a support structure and a high-deposition rate additive manufacturing technology for depositing an additive manufacturing layer which allows to manufacture a complex structure, e.g., including an overhang or a cavity. For instance, enclosed cavities with complex shapes may be impossible to manufacture by any other manufacturing technology, without compromising the functionality and/or quality of the cavity and the fabricated device. Thus, said combined use of technologies results in a surprising effect of manufacturing complex structures which are not limited in size and at the same can be manufactured in less time, without compromising on the quality of the manufactured product. This may advantageously allow for a hybrid and/or synergetic use of the different manufacturing technologies, thereby optimizing the quality and productivity of the manufactured the device, particularly for complex structures, such as enclosed cavities, where the internal complex geometries may be impossible to realize. For instance, this method may allow to more efficiently reduce the need for machining of the manufactured part, while still improving the quality thereof, particularly improving the lifespan of the manufactured part and/or providing a more robust device which can withstand temperature fluctuations for long periods of time, such as in the field of molding technology. Furthermore, the support structure may be part of the device which is obtainable by the method of the present invention. Therefore, the present invention does not require the removal of the support structure. This allows to reduce the number of manufacturing steps, thereby, providing a more efficient welded manufacturing method.

In embodiments, the high-accuracy additive manufacturing technology concerns three-dimensional (3D) printing, such as powder-based printing. This may advantageously allow to fabricate the support structure with very tight tolerances (e.g., within microns), enabling the fabrication of intricate geometries and highly accurate support structures. This may advantageously allow to more effectively fabricate the support structure with complex patterns which are challenging or impossible to manufacture using traditional methods. This may advantageously allow to fabricate the support structure with improved mechanical properties due to the controlled melting and consolidation of metal powders in a vacuum environment. This may advantageously allow to fabricate the support structure with smooth surfaces and minimal post-processing required, thereby reducing the need for additional manufacturing steps.

In embodiments, the additive manufacturing layer is deposited by using a high-deposition-rate additive manufacturing technology, such as directed energy deposition or cold-spray. This may advantageously reduce the time required to manufacture, the additive manufacturing layer, and thereby the device, and also reduce the costs of materials (e.g., wire costs less than powder per cm³) and of manual labor. This may advantageously allow to create complex and intricate geometries particular to the application, e.g., complementary to a part to be molded, compared to traditional methods.

In embodiments, the additive manufacturing layer is deposited by means of a single high-deposition-rate additive manufacturing step. Therefore, the present method may advantageously reduce the time of manufacturing the additive manufacturing layer and the device, and improve the quality of the additive manufacturing layer and the device.

According to a second aspect, the present invention provides a device obtainable by the method according to the present invention.

According to a third aspect, the present invention provides a kit comprising: a support structure; and a set of instructions and/or illustrations directing a user to deposit an additive manufacturing layer on the support structure using high-deposition-rate printing, wherein the support structure is fabricated using high-accuracy printing, thereby the additive manufacturing layer is homogeneous, allowing to manufacture a device with a homogeneous outer surface.

Preferred embodiments and their advantages are further provided in the description and the dependent claims.

### Brief description of the drawings

The present invention will be discussed in more detail below, with reference to the attached drawings.
Fig. 1A-1D shows a method for forming a fluid passage in a mold according to the prior art.
Fig. 2A shows an example of a device according to the invention, and Fig. 2B shows a cross-section of the device of Fig. 2A.
Fig. 3A shows a second example of a device according to the invention, and Fig. 3B shows a cross-section of the device of Fig. 3A.
Fig. 4A-4C show an example of a device according to the present invention.
Fig. 5A-5C show an example of a device according to the present invention.
Fig. 6A-6C show an example of a device according to the present invention.
Fig. 7A-7C show an example of a device according to the present invention.
Fig. 8A-8C show an example of a device according to the present invention.
Fig. 9A-9E show an example of a device according to the present invention.
Fig. 10A-10E show an example of a device according to the present invention.

### Description of embodiments

The following descriptions depict only example embodiments and are not considered limiting in scope. Any reference herein to the disclosure is not intended to restrict or limit the disclosure to exact features of any one or more of the exemplary embodiments disclosed in the present specification.

Furthermore, the terms first, second, third and the like in the description and in the claims are used for distinguishing between similar elements and not necessarily for describing a sequential or chronological order. The terms are interchangeable under appropriate circumstances and the embodiments of the invention can operate in other sequences than described or illustrated herein.

Furthermore, the various embodiments, although referred to as "preferred" are to be construed as exemplary manners in which the invention may be implemented rather than as limiting the scope of the invention.

The term "comprising", used in the claims, should not be interpreted as being restricted to the elements or steps listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a device comprising A and B" should not be limited to devices consisting only of components A and B, rather with respect to the present invention, the only enumerated components of the device are A and B, and further the claim should be interpreted as including equivalents of those components.

In this document, the term "substrate" refers to a foundational structure serving as a base upon which the support structure and the additive manufacturing layer are provided. It may define an initial shape and dimensions of the device. For instance, in mold-related embodiments, the substrate is a pre-shape for arriving at the final device shape and dimensions. The substrate may serve as a platform on top of which the wall may be attached, e.g., by welding or adhering, or other attaching means, and the covering layer is integrally formed, ultimately creating a unified and functional device. The substrate may be fabricated from one or more metals and/or alloys, such as, steels (e.g., carbon steel, alloy steels, stainless steels), aluminum (e.g., aluminum alloys, such as 6061, 6063, 6082, and 7075), cast or forged or rolled steel, bronze, etc. In embodiments, the substrate may comprise or may be formed of a forged material. In other non-limiting examples, the substrate may be fabricated from one or more (thermo)plastics, such as, Polyethylene (PE), Polypropylene (PP), Polyvinyl Chloride (PVC), Acrylonitrile Butadiene Styrene (ABS), Polycarbonate (PC), Polyethylene Terephthalate (PET), Polytetrafluoroethylene (PTFE). Thus, the providing of the substrate may comprise fabricating the substrate by any type of manufacturing technologies, such as, added manufacturing, forging, casting, rolling, printing, etc.

In this document, the term "support structure" refers to a structure which may be fabricated using a high-accuracy additive manufacturing technology. The support structure may be provided to avoid having to weld/print additional material to support the additional (printing of) subsequent layers. Furthermore, the support structure may improve the surface quality of the deposited additive manufacturing layer and the fabricated device having high overhang angles. Furthermore, the support structure may improve the process efficiency for providing structures with high overhang angles which otherwise would require part and/or torch manipulation as well as reduced additive manufacturing (e.g., printing) speed. For example, in embodiments where the support structure is provided at an angle with a PA welding position or flat position, the deposited additive manufacturing layer at said angle with the PA would be supported by the support structure, and thereby prevented from flowing in unwanted directions. The support structure may have a geometry such that it may be tailored for specific applications, such as fluid conveyance, cable routing/encapsulation, and/or structural reinforcement. For example, the support structure has a freeform shape. In other examples, the support structure may have any one or combination of cylindrical shape(s), (polygonal) prism shape(s) (e.g., triangular, rectangular, square, quadrilateral, trapezoidal, etc. prism shape(s)), concentric shape(s), etc. In channel-related embodiments, the support structure concerns a wall. In this document, the term "wall" refers to a structure which may be prefabricated separately from the substrate and the covering layer. The wall may have a geometry such that it may be tailored for specific applications, such as fluid conveyance, cable routing/encapsulation, and/or structural reinforcement. For example, the wall may be flat or curved (e.g., has a polygonal cross-section) or may comprise a plurality of (interconnected) walls. The wall may serve as a structural support for depositing the additive manufacturing layer on the wall and covering the wall. The support structure may be fabricated by means of any one of added manufacturing, forging, printing, etc. Preferably, the support structure may be fabricated using a high-accuracy added manufacturing technology, such as high-accuracy printing or a high-accuracy powder-based added manufacturing technology, such as PBF, L-PBF, LPD, SLM, FDM, FFF, DMLS, EBM, MJF, etc. Examples of (powder-based) materials which may be comprised in or may form the support structure include: stainless steel (e.g., 304, 316, etc.), titanium alloys (e.g., Ti-6AL-4V), aluminum alloys, cobalt-chromium alloys, copper, carbon steels, bronze, etc. Such materials comprised or form the support structure may allow for at least one of: high accuracy fabrication of complex structures and the fabrication of more robust structures. In other non-limiting examples, the support structure may be fabricated from one or more (thermo)plastics, such as, Polyethylene (PE), Polypropylene (PP), Polyvinyl Chloride (PVC), Acrylonitrile Butadiene Styrene (ABS), Polycarbonate (PC), Polyethylene Terephthalate (PET), Polytetrafluoroethylene (PTFE). Materials, such as copper, carbon steels, and bronze may advantageously provide good thermal conductivity compared to the other materials. In channel-related embodiments, the wall comprises two legs, wherein each leg comprises a foot. The term "foot" may refer to a root face. wherein the welding of the respective foot may relate to welding of respective root, i.e., a space where the foot and the substrate meet before any weld material is added.

In this document, mold-related embodiments refer to one or more of the (channel-related) embodiments, but not necessarily all of the embodiments, wherein the device concerns a mold. Non-mold-related embodiments refer to one or more of the embodiments, but not necessarily all of the embodiments, wherein the device does not concern a mold.

In this document, the term "channel" refers to a defined space or path formed within the device. The channel may be defined by attaching the wall onto the substrate, creating a continuous, enclosed path along their interface. The term "attaching" may refer to any one or combination of connected, joining, adhering, bonding, fixing, and welding preferably attaching concerns welding. In this document channel-related embodiments refer to one or more of the embodiments, but not necessarily all of the embodiments, wherein the device comprises a channel. In channel-related embodiments, a groove may be first formed in the substrate, providing a space or path, wherein the wall being attached onto the substrate, such as by welding or adhering, or other attaching means, preferably contiguous with the groove, further effectively "caps" the groove and defines the channel between the groove and the wall, i.e., between the inner surface of the groove and the wall. The groove may be formed by machining, preferably by subtractive manufacturing, such as milling, turning, honing, etc. The channel may have a width related to a width of the wall and/or a width of the groove. Said widths may relate to a dimension perpendicular to the respective lengths along which the respective of the channel, wall, and groove extend. The term "multi-directional" refers to bi-directional or tri-directional, and refers to the extension along multiple directions, wherein said multiple directions may relate to a multi-dimensional space. Such a channel may lie on a line, or may lie on a plane, or may not lie on a plane. In channel-related embodiments, the multi-directional channel comprises twists and turns. Said turns may relate to curves of the channel. In embodiments, at least one of a radial curvature of at least one of the curves is less than or equal to 10 cm, less than or equal to 9 cm, less than or equal to 8 cm, less than or equal to 7 cm, less than or equal to 6 cm, less than or equal to 5 cm, less than or equal to 4 cm, etc. In channel-related embodiments, the radial curvature may be multi-planar. The present invention may allow to reduce the radial curvature of the channel, which may allow to optimize the positioning and/or the shape of the channels.

In this document, the term "additive manufacturing layer" refers to a layer deposited on the support structure covering said support structure. The additive manufacturing layer may serve as a protective barrier. In channel-related embodiments, the additive manufacturing layer is a covering layer which may be (integrally) formed on the substrate covering at least the wall. The covering layer may contribute to the device's overall functionality, such as the outer surface of the mold to be in contact with the part to be molded. The additive manufacturing layer may be deposited by a single additive manufacturing step. In embodiments, the additive manufacturing layer is deposited by a single printing step and/or a single cold spray step. Cold spray technologies may advantageously allow to reduce the temperatures for fabricating the additive manufacturing layer, which means it can be used on heat-sensitive materials without causing damage. This may advantageously allow to reduce residual stresses and distortion compared to melting, which may be crucial for maintaining accuracy of the additive manufacturing layer contour. In preferred embodiments, the additive manufacturing layer is deposited by a single high-deposition-rate additive manufacturing step, particularly a high-deposition-rate printing step or a high-deposition-rate cold spray step. Examples of high-deposition-rate additive manufacturing technologies include DED, WAAM, LMD, EBAM, etc. High-deposition-rate added manufacturing technologies advantageously allow to deposit the additive manufacturing layer more quickly and at a higher quality, of one or more materials from a larger variety of materials (e.g., alloys with higher thermal conductivity), compared to other technologies, such as high-accuracy added manufacturing technologies or cold spray technologies. Examples of materials which may be comprised in or may form the additive manufacturing layer include: carbon steel, low-alloy steel (e.g., 4340, CrMo), high-alloy steels (e.g., stainless steels, duplex stainless steels, etc.), nickel alloys (e.g., Iconel 625), aluminum alloys (e.g., 6061, 7075), titanium alloys, magnesium alloys, bronze, etc. Such wire-based material(s) comprised in or form the additive manufacturing layer may allow for at least one of: higher-deposition-rate added manufacturing, increased material variety (compared to powder-based materials), lower level of porosity of the materials and/or increased thermal conductivity thereof (compared to powder-based materials), and a broader choice of materials (compared to powder-based materials). In other non-limiting examples, the wall may be fabricated from one or more (thermo)plastics, such as, Polyethylene (PE), Polypropylene (PP), Polyvinyl Chloride (PVC), Acrylonitrile Butadiene Styrene (ABS), Polycarbonate (PC), Polyethylene Terephthalate (PET), Polytetrafluoroethylene (PTFE). In embodiments, the additive manufacturing layer is deposited at a deposition rate of at least 1 kg/h, at least 2 kg/h, at least 3 kg/h, at least 4 kg/h, at least 5 kg/h, at least 6 kg/h, at least 7 kg/h, at least 8 kg/h, at least 9 kg/h, at least 10 kg/h, etc.

In this document, the term "slot" may refer to an opening or a cut made in the substrate, particularly at the edge of the groove and/or the wall. The slot may be a transitional opening between the substrate and the wall and/or groove. In channel-related embodiments, the slot concerns a bevel or a chamfer, which may involve a (downward) slope from the outer surface of the substrate. In channel-related embodiments, the bevel or chamfer is symmetric, wherein the sides of the bevel or chamfer are equal or wherein the angles on both sides of the bevel or chamfer are equal. Alternatively, the bevel or chamfer may be non-symmetric, wherein the sides of the bevel or chamfer may be different or wherein the angles on both sides of the bevel or chamfer may be different. In channel-related embodiments, the bevel or chamfer is rounded. In channel-related embodiments, the two slots adjacent to the wall and/or groove are identical. Alternatively, the two slots adjacent to the wall and/or groove are different. In channel-related embodiments, at least one slot, preferably two slots, are formed adjacent to the wall and/or the groove, e.g., by subtractive manufacturing, before welding the wall onto the substrate. The wall may be attached onto the substrate at the slot(s), such as by welding or adhering, or other attaching means, i.e., the attaching is performed in the slot(s) and/or between the wall the inner surface of the slot(s). In groove-related embodiments, the slot(s) are formed or provided after forming or providing the groove. In this document groove-related embodiments refer to one or more of the channel-related embodiments, but not necessarily all of the channel-related embodiments, wherein the device comprises a groove.

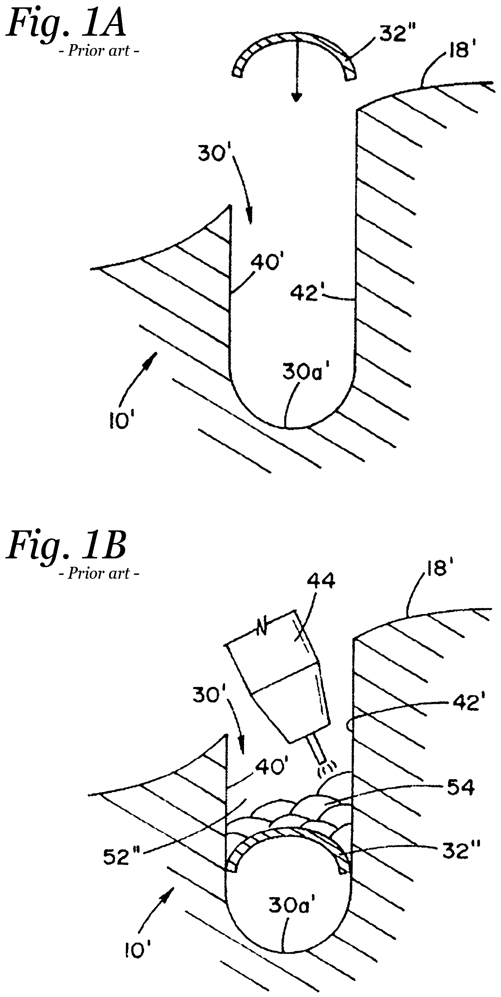

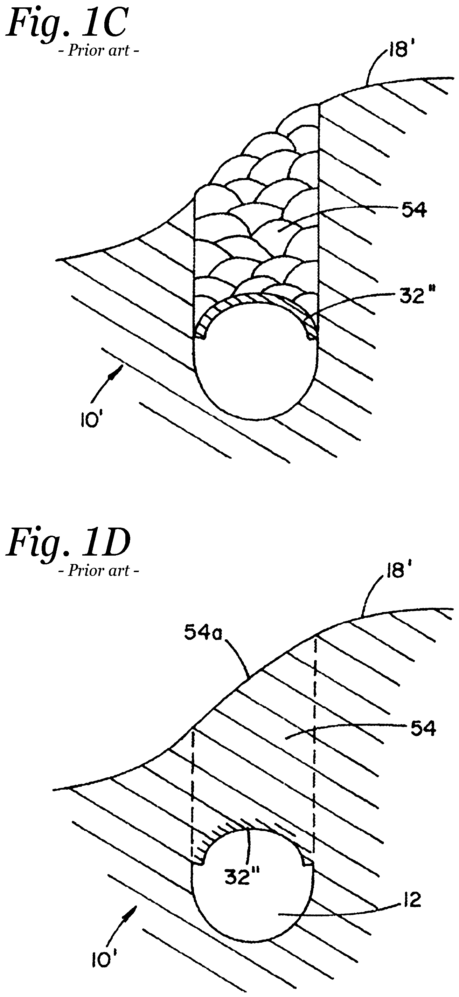

Fig. 1A-1D show a method for forming a fluid passage 12 in a mold 10' according to the prior art. Fig. 1A and 1B show a weld support 32" installed in a channel 30' having a lower channel 30a' defined in a surface 18' of a mold 10' and fill material 54 being welded across the channel 30' above the weld support 32" for closing the channel 30'. Also as shown are spaced apart lateral walls 40' and 42'. Fig. 1B shows a welder 44 depositing fill material 54 above the weld support 32" to fill a cavity 52" defined between the weld support 32" and the molding surface 18' of the mold 10'. Fig. 1C shows that the fill material 54 fills the cavity 52" and extends beyond the molding surface 18' of the mold 10'. Fig. 1D shows the fill material 54 being reduced so that an upper surface 54a of the fill material 54 is contiguous with the molding surface 18' of the mold 10'. Unlike the prior art, the present invention provides a welded manufacturing method comprising: providing a support structure; depositing an additive manufacturing layer on the support structure, wherein the step of providing a support structure comprises fabricating the support structure using a high-accuracy additive manufacturing technology, and wherein the additive manufacturing layer is deposited using a high-deposition-rate additive manufacturing technology. In channel-related embodiments, the method comprises providing a substrate and welding the support structure onto the substrate, wherein the welding of the support structure to the substrate defines a channel. In channel-related embodiments, the support structure is a wall, and the additive manufacturing layer is a covering layer.

In embodiments, the method further comprises removing the support structure. This may be particularly useful and more efficiently performed wherein the support structure is fabricated with a material having low miscibility, such as an alloy with low miscibility, e.g., mixed alloys. Low-miscibility materials may relate to materials with limited or no dilution/mixing. This may involve pushing/pulling the support structure away from the additive manufacturing layer or pushing/pulling the additive manufacturing layer away from the support structure. The pushing/pulling may involve sliding at least one of the support structure and the additive manufacturing layer apart from one another.

In embodiments, the support structure comprises a plurality of support structures. At least two of the plurality of support structures have a different shape and/or dimensions, preferably all of the support structures have a different shape and/or dimensions. Thus, the complexity of the support structure can be increased, and a wider range of geometries can be achieved. Alternatively, at least two of the plurality of support structures have the same shape and/or dimensions, preferably all of the support structures have the same shape and/or dimensions. Thus, the support structure can be more efficiently fabricated. The step of providing the support structure may comprise interconnecting the plurality of support structures. Thereby, the present invention allows to more effectively manufacture a support structure having a complex shape. In certain applications, the possible limitation in the size in manufacturing the support structure may be overcome by interconnecting the same to obtain the desired shape and size of the support structure. Said interconnecting may be performed on support structures connecting them sequentially. Said interconnecting may be provided by welding of said plurality of support structures, preferably by welding the support structures sequentially.

In embodiments, the support structure comprises a plurality of openings. Said openings may allow to reduce the cost of fabricating the support structure, since less material may be used. In embodiments, the openings are curved. In embodiments, the openings are multi-directional. Thus, providing such openings in the support structure may be difficult and in some complex geometries impossible with conventional technologies, such as with drilling. Furthermore, said openings may complicate the machining of another layer fabricated onto the support structure using more conventional technologies. Therefore, the inventors have found that by combining a high-accuracy added manufacturing technology to fabricate the support structure, with a high-deposition-rate added manufacturing technology to fabricate the additive manufacturing layer, the post-processing step of machining may be avoided, and at the same time the openings with complex geometries may be fabricated..

In embodiments, a ratio of the volume of the openings to the volume of a material in the support structure is at least 1:1. Other examples of the ratio include: 0.2:1, 0.4:1, 0.5:1, 0.6:1, 0.8:1, 1.2:1, 1.4:1, 1.5:1, 1.6:1, 1.8:1, 2:1, 2.5:1, 3:1, etc. By increasing the ratio of the volume of the openings to the printed material in the support structure, the depositing a layer on the support structure may become difficult, and in some cases impossible, particularly with traditional methods. Therefore, the method provides depositing an additive manufacturing layer, particularly using high-deposition-rate printing, which allows to deposit a layer bridging said openings.

In embodiments, the support structure is welded onto a substrate. This may allow to position the support structure, and thereby the additive manufacturing layer, on the substrate, such as a pre-shape. In channel-related embodiments, the welding of the support structure onto the substrate defines one or more channels. In non-channel-related embodiments, the substrate may be removed, e.g., the substrate and the support structure are unwelded from each other. The welding onto the substrate may provide the support structure with the required rigidity to deposit the additive manufacturing layer on top of the support structure.

In embodiments, the additive manufacturing layer covers the support structure, preferably covering at least the support structure and portions of the substrate in immediate proximity to the support structure. In embodiments, the additive manufacturing layer extends over the substrate at least a multiple time the width of the support structure. For example, the additive manufacturing layer extends over the substrate at least 1.1 times, 1.2 times, 1.3 times, 1.4 times, 1.5 times, 1.6 times, 1.7 times, 1.8 times, 1.9 times, 2 times, 3 times, etc. the width of the support structure, and optionally extending across the whole width of the substrate.

In embodiments, the depositing of the additive manufacturing layer further defines one or more channels. For example, by bridging said opening, the additive manufacturing layer may define further one or more channels. In another example, the additive manufacturing layer may be deposited to form a hollow structure with open ends, such as a cylinder, thereby defining a channel.

In embodiments, the support structure defines a plane. For example, a top or outer surface of the support structure defines a plane. In embodiments, at least one of the plurality of support structures comprised therein may define a plane, preferably each thereof may define a plane, more preferably, the plurality of support structures define a plane. This may allow depositing the additive manufacturing layer on the support structure in a simpler way. The plurality of support structures may be lying or welded on a non-coplanar surface, such as the substrate.

In embodiments, at least a part of the depositing of the additive manufacturing layer is performed at a non-PA position or at an angle with the PA welding position, e.g., at least 10 degrees, at least 15 degrees, at least 20 degrees, at least 25 degrees, at least 30 degrees, at least 35 degrees, at least 40 degrees, etc. with the PA welding position. In embodiments, at least a part of the support structure forms said angle with the PA welding position. Thereby, at least a part of the additive manufacturing layer may form said angle with the PA welding position.

In embodiments, the additive manufacturing layer is deposited such that a substantially planar structure is formed. In embodiments, the additive manufacturing layer is deposited such that a plurality of substantially planar structures is formed.

In embodiments, a first portion of the additive manufacturing layer is deposited at the PA position and a second portion of the additive manufacturing layer is deposited at an angle with the PA position. The first portion and the second portion of the additive manufacturing layer may be in close proximity to each other. Thereby, the additive manufacturing layer may be complex and difficult to fabricate, and in some cases impossible, using traditional methods, for example due to the obstruction of (part of) the first portion of the additive manufacturing layer when depositing the second (part of) the second portion of the additive manufacturing layer. By providing the support structure for the second portion of the additive manufacturing layer, the depositing may be more easily and effectively performed, such that, e.g., the (outer surface of the) additive manufacturing layer defines a plane. In embodiments, the depositing of the additive manufacturing layer takes into consideration the welding position at each portion of the additive manufacturing layer, such that the resulting additive manufacturing layer defines a plane. For example, for the first portion, less volume is deposited and/or for the second portion, more volume is deposited, such that the height of both first and second portions is substantially equal.

In embodiments, the support structure and the additive manufacturing layer comprise or are formed of different materials. For example, the additive manufacturing layer comprises or is formed of bronze, and the support structure comprises or is formed of stainless steel. Thus, the additive manufacturing layer may improve corrosion resistance and increase thermal conductivity, while the support structure may reduce the thermal conductivity. In another example, the additive manufacturing layer comprises or is formed of stainless steel, and the support structure comprises or is formed of bronze. This may allow the support structure to have a higher thermal conductivity for avoiding undesired melting/welding of the different materials. In another example, the support structure may comprise or may be formed of 316L, and the additive manufacturing layer may comprise or may be formed of a chemically resistant and/or wear-resistant alloy, such as chromium molybdenum CrMo steel.

In embodiments, the support structure defines an enclosed cavity. The cavity may be defined by attaching, e.g., welding, the support structure onto a substrate. In embodiments, the plurality of support structures comprised in the support structure define respective enclosed cavities. The cavities may be defined by attaching, e.g., welding, the support structure onto the substrate. The one or more cavities defined by the support structure may further allow to ensure the protection of respective one or more parts of the substrate defining the one or more cavities.

In channel-related embodiments, the device obtainable by the method according to the invention comprises the substrate; the wall which is attached onto the substrate thereby defining the channel; and the covering layer extending over the substrate and covering at least the wall, wherein the wall is prefabricated, and wherein the covering layer is integrally formed. The prior art does not disclose attaching, particularly welding a wall onto the substrate and depositing the covering layer by means of a single additive manufacturing step over (the outer surface of) the substrate and covering at least the wall.

In channel-related embodiments, the wall and/or the channel extends along at least one direction, preferably along two or more directions. In channel-related embodiments, a first portion of the wall and/or the channel extends along a first direction and a second portion of the wall and/or the channel extends along a second direction, wherein the first direction is different from the second direction, for instance wherein the first direction is opposite to the second direction, or wherein the first direction form an angle with the second direction, such as at least 10 degrees, at least 20 degrees, at least 30 degrees, at least 40 degrees, at least 45 degrees, at least 50 degrees, at least 60 degrees, at least 70 degrees, at least 80 degrees, at least 90 degrees, etc.

In channel-related embodiments, the wall is a multi-directional wall comprising twists and turns. Additionally, or alternatively, the wall may be conformal to the contour of the substrate. This may allow to more easily define a channel extending in multiple directions and comprising twists and turns, and, additionally or alternatively, being conformal to the contour of the substrate. However, the channel may extend in multiple directions and comprise twists and turns, and, additionally or alternatively, may be conformal to the contour of the substrate, without the wall extending in multiple directions and/or comprising twists and turns, and, additionally or alternatively, being conformal to the contour of the substrate.

In channel-related embodiments, the wall is prefabricated by using a high-accuracy additive manufacturing technology, such as high-accuracy printing, which may allow to fabricate, e.g., print, complex shapes. Such complex shapes may be related to the wall being multi-directional and comprising twists and turns. Such complex shapes may be related to the wall additionally or alternatively being conformal to the contour of the substrate, which may have a complex outer surface and/or a non-uniform outer surface and/or a non-planar outer surface and/or a multi-planar outer surface. By using high-accuracy additive manufacturing technology, such as high-accuracy printing, the wall can me more accurately fabricated compared to other conventional techniques such as bending tubes or using tube cut-outs or welding said tubes or cutouts to each other to form the complex pattern.

In channel-related embodiments, the covering layer is deposited by using high-deposition-rate additive manufacturing technology, such as high-deposition-rate printing. This allows the covering layer to be deposited along the direction of extension of the wall and/or the channel. Additionally, or alternatively, the covering layer may be deposited along at least one direction forming a respective at least one angle, e.g., up to 90 degrees, such as at least 10 degrees, at least 20 degrees, at least 30 degrees, at least 40 degrees, at least 45 degrees, at least 50 degrees, at least 60 degrees, at least 70 degrees, at least 80 degrees, etc., with the direction of extension of the wall and/or the channel. A combination of depositing the layer, in some portions along the direction and in other portions at one or more angles with the direction of extension of the wall and/or the channel, can allow for a more efficient and effective way of depositing the covering layer in a single additive manufacturing step, thereby ensuring that the covering layer is integrally formed. For instance, on portions of the substrate in immediate proximity to the wall, the covering layer may be deposited along the direction of extension of the wall and/or the channel, such as along the length of the wall and/or channel, and on portions of the wall, the covering layer may be deposited perpendicular to the direction of extension of the wall and/or the channel, such as along the width of the wall and/or channel.

In channel-related embodiments, the covering layer covers at least the wall and portions of the substrate in immediate proximity to the channel and/or the wall. In channel-related embodiments, the covering layer extends over the substrate at least a multiple time the width of the wall and/or channel. For example, the covering layer extends over the substrate at least 1.1 times, 1.2 times, 1.3 times, 1.4 times, 1.5 times, 1.6 times, 1.7 times, 1.8 times, 1.9 times, 2 times, 3 times, etc. the width of the wall, and optionally extending across the whole substrate. In channel-related embodiments, the covering layer extends over at most 10% of the substrate, at most 20% of the substrate, at most 30% of the substrate, at most 40% of the substrate, at most 50% of the substrate, at most 60% of the substrate, at most 70% of the substrate, at most 80% of the substrate, at most 90% of the substrate, at most 100% of the substrate, etc.

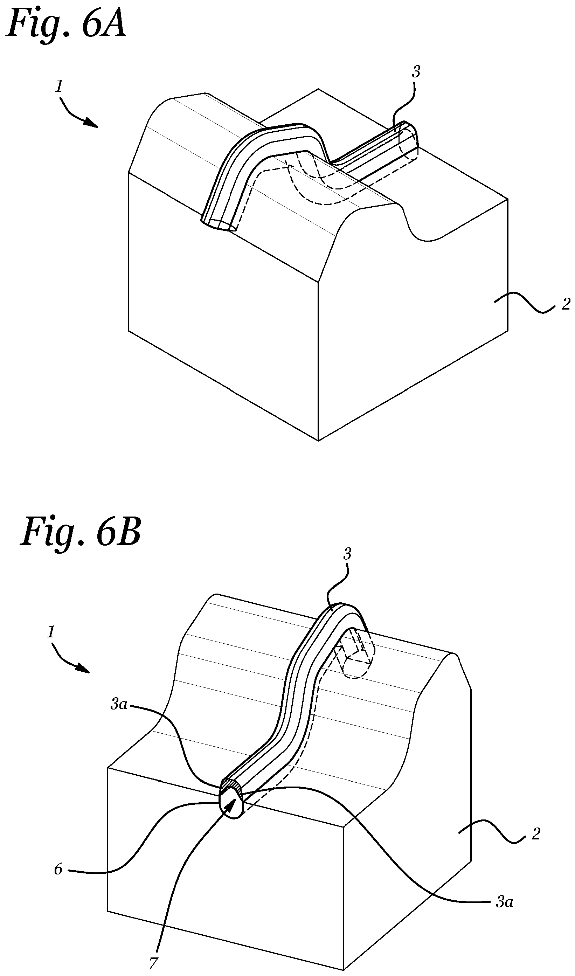

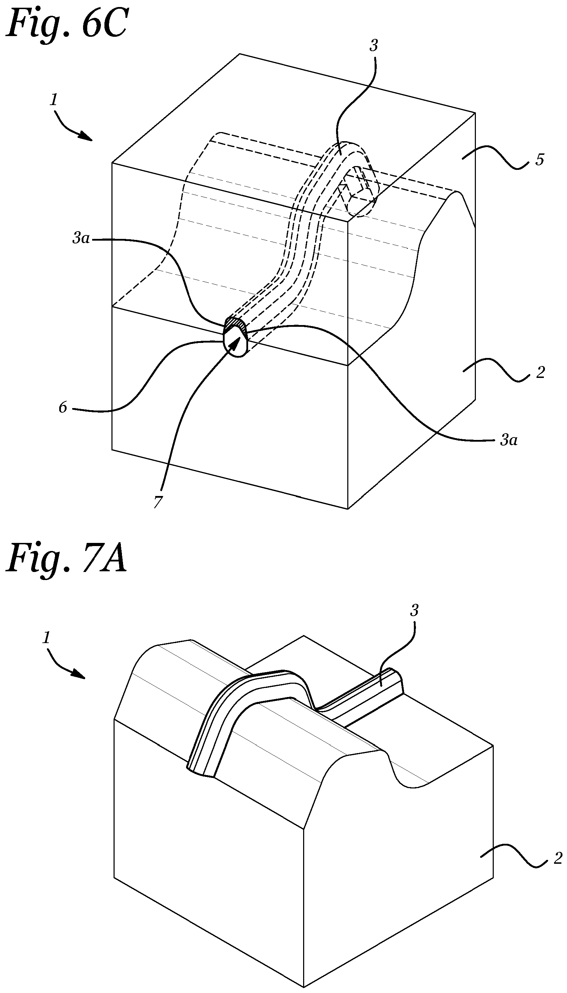

In channel-related embodiments, the wall comprises two legs, wherein each leg comprises a foot attached, e.g., by welding or adhering, or other attaching means, onto the substrate. In such channel-related embodiments, the wall may be a wall with a non-convex shape, such as a curved wall, or a plurality of interconnected walls such as a bridge or ramps. In preferred channel-related embodiments, each leg comprises a section which tapers towards the respective foot. For example, an internal side of the section of each leg may taper towards the foot, e.g., as shown in Fig. 6B-6C, Fig. 7B-7C, Fig. 8B-8C. In another example, an external side of the section of each leg may taper towards the foot.

In channel-related embodiments, the wall is flat or defines a plane. For example, the outer surface of the wall may be flat. In other examples, the wall may have a polygonal shape, such as a square shape, a rectangular shape, a quadrilateral shape, a trapezoidal shape, etc. In channel-related embodiments, the edges of the wall taper, e.g., forming a trapezoidal shape.

In channel-related embodiments, at least two of the substrate, the wall, and the covering layer comprise or are formed of different materials, preferably wherein all of the substrate, the wall, and the covering layer comprise or are formed of different materials. For example, the wall and the covering layer comprise or are formed of the same material, such as stainless steel, and the substrate comprises or is formed of cast or forged or rolled steel. In another example, the covering layer comprises or is formed of steel. In another example, the covering layer comprises or is formed of bronze, the wall comprises or is formed of stainless steel, and the substrate comprises or is formed of cast or forged or rolled steel. Thus, the covering layer may improve corrosion resistance and increase thermal conductivity, while the wall may reduce the thermal conductivity, e.g., towards the substrate. Thus, this may advantageously allow for more flexibility in the. functionality and quality of the elements of the device. In embodiments, at least two of the substrate, the wall, and the covering layer comprise or are formed of the same material, preferably wherein all of the substrate, the wall, and the covering layer comprise or are formed of the same material. This can allow for a more efficient fabrication of the device without having to change the material being used.

In channel-related embodiments, the substrate comprises a first layer formed of a first material and a second layer formed of a second material atop the first layer, wherein the wall may be attached, e.g., by welding or adhering, or other attaching means onto the second layer. In preferred channel-related embodiments, the first material is different from the second material. Additionally, or alternatively, the first layer is formed by means of a non-printing technique and the second layer is formed by means of a printing technique, such as high-accuracy printing or preferably high-deposition-rate printing. In channel-related embodiments, the second layer and the covering layer may be deposited by the same additive manufacturing technology, such as the same high-deposition-rate printing, e.g., by WAAM. In channel-related embodiments, the first material comprises or is formed of a forged material, and the second material comprises or is formed of a printed material. For example, the first layer is a forged layer, and the second layer is a printed layer using additive manufacturing technologies, such as high-deposition-rate printing, and where the first material is cast or forged or rolled steel, and the second material is stainless steel. In channel-related embodiments, at least one of the covering layer and the wall comprises or is formed of a material different from the first material and/or the second material. For example, the first layer is forged, the second layer is deposited by a first additive manufacturing technology (e.g., high-deposition-rate printing), the wall is fabricated by means of high-accuracy printing, and the covering layer is deposited by a second additive manufacturing technology (e.g., high-deposition-rate printing. The first and the second additive manufacturing technology may be different, preferably the same (e.g., to reduce complexity of the manufacturing steps). In this example, the first material may be formed of cast or forged or rolled steel, the second material may be stainless steel, the wall is formed of the second material, and the covering layer may be formed of bronze. It may be advantageous that second material has low thermal conductivity and/or the second layer comprises or is formed of low thermal conductive material, as this reduced heat exchange between the first and second layers, and thereby, improves the heat exchange between the channels and the exterior of the device (e.g., with a part to be molded). It may be further advantageous that the first material is a low-cost material, which allows to keep costs low when using more expensive material(s) for fabricating/depositing the second layer.

In channel-related embodiments, the device comprises a groove within the substrate thereby further defining the channel within the substrate. Thus, first forming the groove and then welding the wall onto the substrate, thereby defines the channel. In preferred channel-related embodiments the wall and the groove are contiguous with each other, i.e., the wall may at least partially, preferably completely, cap the groove. Thus, by welding the wall onto the substrate the channel may be defined as the inner surface of the wall and the groove.

In groove-related embodiments, the groove is formed in the second layer of the substrate. Therefore, the second layer may be deposited such that the thickness is large enough to form the groove, e.g., the thickness of the second layer is larger than or equal to the expected depth of the groove. Additionally, or alternatively, the depth of the groove may be in view of the thickness of the second layer, e.g., the depth of the groove is less than or equal to, preferably less than or almost equal to, the thickness of the second layer. In preferred channel-related embodiments, an inner surface of the groove comprises or is formed of the second material. In channel-related embodiments, the inner surface of the channel (i.e., the inner surface of the groove and the wall) may be made of the second material.

In groove-related embodiments, the groove is multi-directional comprising twists and turns. Additionally, or alternatively, the groove may be conformal to the contour of the substrate. This may allow to more easily define a channel comprising twists and turns, and, additionally or alternatively, being conformal to the contour of the substrate. However, the channel may be is multi-directional comprising twists and turns, and, additionally or alternatively, being conformal to the contour of the substrate, with at least one of the groove and the wall being multi-directional and comprising twists and turns, and, additionally or alternatively, being conformal to the contour of the substrate.

In groove-related embodiments, the groove has one or more variable dimensions along the direction of the extension of the groove. For example, a first portion of the groove has a larger depth and/or diameter than a second portion of the groove. This may allow to create pressure in portions of the channel where the groove is deeper and/or wider compared to sections with shallower and/or narrower grooves. The one or more variable dimensions may promote turbulence and mixing within the channel. Furthermore, by carefully designing the groove dimension(s) variations, you can influence the direction and velocity of fluid flow within the channel, thereby allowing more precise control over fluid distribution.

In channel-related embodiments , slots adjacent to the wall and/or the groove may be first created (e.g., by subtractive manufacturing), before attaching the wall onto the substrate. The wall may be attached onto the substrate at the slots, such as by welding or adhering, or other attaching means i.e., the attaching is performed in the slots and/or between the wall the inner surface of the slots. In embodiments, the welding fills the slots completely, preferably, the welding is flush with the outer surface of the substrate. In embodiments where the wall comprises two legs, each foot is attached, e.g., welded, onto the substrate, particularly at the respective slot. Each leg may be attached, e.g., welded, to the respective slot, i.e., to the inner surface of the respective slot. In embodiments where the wall is flat, the edges of the wall are attached, e.g., welded, onto the substrate, particularly at the respective slot. This may advantageously allow the covering layer to be efficiently and effectively deposited on a continuous surface, without having to take into account a large differential height of the wall. In preferred embodiments, the wall is flush with the substrate, i.e., the outer surface of the wall is flush with the outer surface of the substrate. This may advantageously allow the covering layer to be more efficiently and effectively deposited on a continuous surface, without having to take into account a differential height of the wall. In even more preferred embodiments, both the wall and the welding in the slots are flush with the substrate, particularly the outer surface of both the wall and the welding are flush with the outer surface of the substrate. This may advantageously allow the covering layer to be even more efficiently and effectively deposited on a continuous surface, without having to take into account a large differential height of the wall and the welding thereof to the substrate.

In channel-related embodiments, each of the slots is multi-directional comprising twists and turns. Additionally, or alternatively, each of the slots may be conformal to the contour of the substrate. This may allow to more easily weld the wall onto the substrate, particularly at the respective slot (i.e., to the inner surface of the respective slot). In channel-related embodiments, the slots extend multi-directionally, preferably contiguous with the groove and/or the wall.

In channel-related embodiments, the slots concern side slots or recesses. In such channel-related embodiments, the slots or recesses may form an angle with the outer surface of the substrate, such as -20 degrees or less, -25 degrees or less, -30 degrees or less, -35 degrees or less, -40 degrees or less, -45 degrees or less, -50 degrees or less, -55 degrees or less, -60 degrees or less, etc.

In channel-related embodiments, each foot or edge of the wall forms an angle with the outer surface of the substrate. In such channel-related embodiments, each foot or edge of the wall may form an angle with the outer surface of the substrate, such as 90 degrees or more, 100 degrees or more, 110 degrees or more, 120 degrees or more, 130 degrees or more, 140 degrees or more, 150 degrees or more, etc.

In channel-related embodiments, each foot or edge of the wall forms an angle with the surface of the respective slot or recess, such as 70 degrees or more, 75 degrees or more, 80 degrees or more, 85 degrees or more, 90 degrees or more, 100 degrees or more, 110 degrees or more, 120 degrees or more, 130 degrees or more, 140 degrees or more, 150 degrees or more, etc.

In channel-related embodiments, the method comprises providing a plurality of walls which are each attached, e.g., welded, onto the substrate thereby defining a plurality of channels, respectively. The method may comprise extending the covering layer over the substrate and covering at least each of the walls, wherein each of the wall is prefabricated, and wherein the covering layer is integrally formed. In channel-related embodiments, the plurality of walls may be identical. Alternatively, each of the plurality of walls may be different. Alternatively, some of the plurality of walls may be different, e.g., at least two walls are different, at least three walls are different, etc.

In groove-related embodiments, the method comprises forming a plurality of grooves in the substrate thereby further defining the plurality of channels, respectively, at least partially in the substrate, preferably wherein the grooves are formed in the second layer of the substrate. In groove-related embodiments, the grooves are contiguous with the walls, respectively. In groove-related embodiments, the plurality of grooves may be identical. Alternatively, each of the plurality of grooves may be different. Alternatively, some of the plurality of grooves may be different, e.g., at least two grooves are different, at least three grooves are different, etc.

In groove-related embodiments, each of the walls is flat and preferably each of the walls is flush with the substrate. Alternatively, each of the walls is curved. Alternatively, some of the walls are flat and some of the walls are curved, preferably at least some of the flat walls are flush with the substrate. For example, at least two walls are flat, at least two walls are curved, and one of the flat walls is flush with the substrate.

In channel-related embodiments where slots are first provided in the substrate, a slot in between two walls and/or two grooves may be a common slot to said two walls and/or two grooves. This may advantageously allow to reduce the number of slots, and thereby, allow to increase the number of walls and/or grooves and/or channels, while reducing the number of steps needed to provide said slots.

In channel-related embodiments, the openings in the support structure may define respective channels. Preferably, the respective channels may be distinct from one another, such that the channels do not intersect or interconnect with one another on the substrate or within the support structure.

### Examples

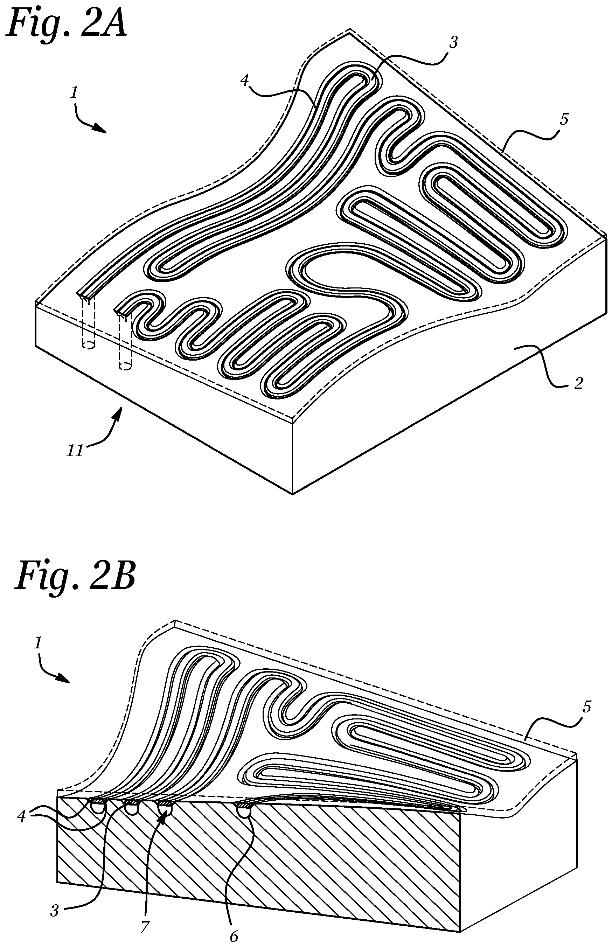

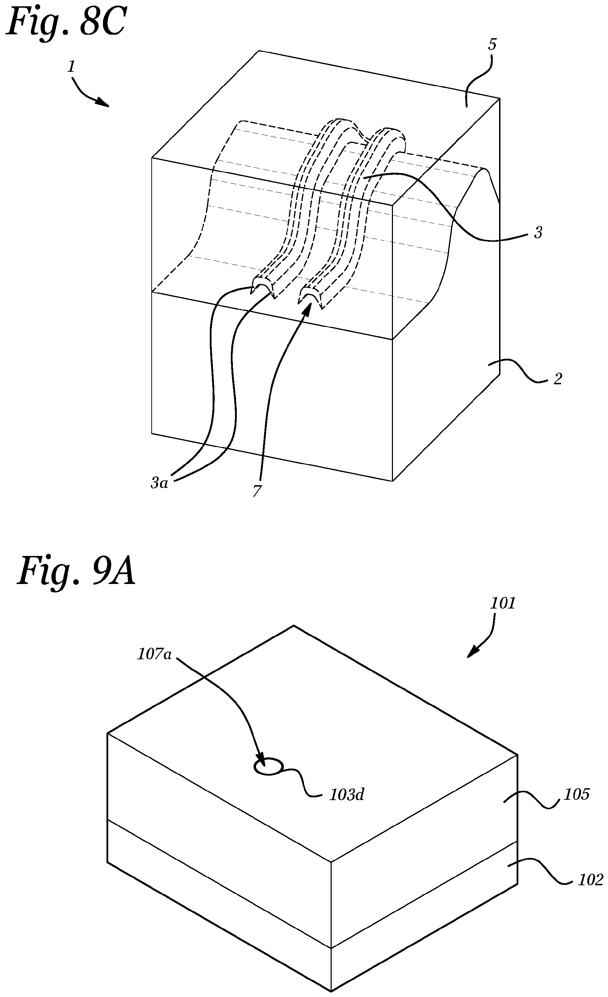

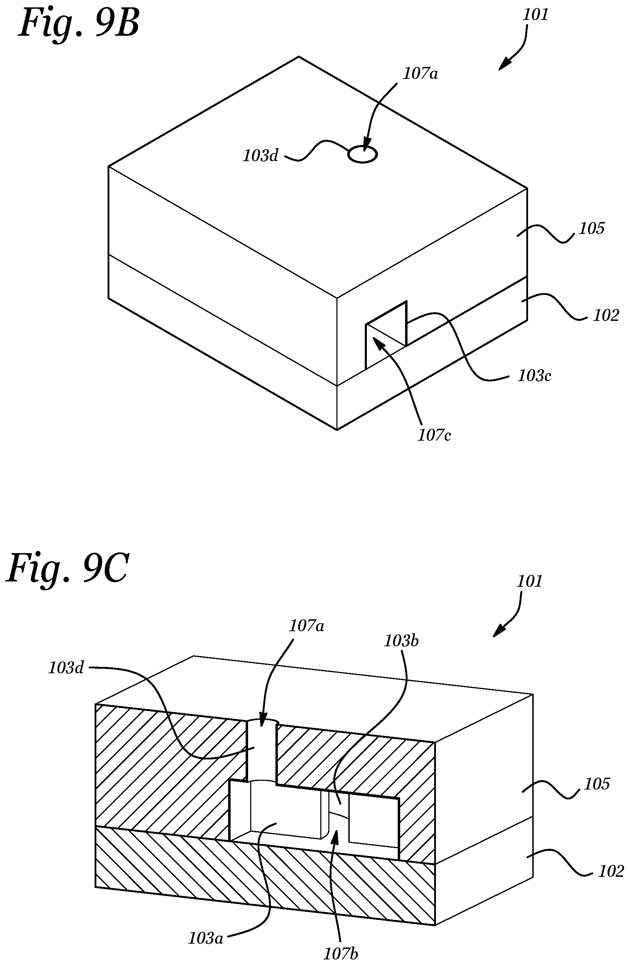

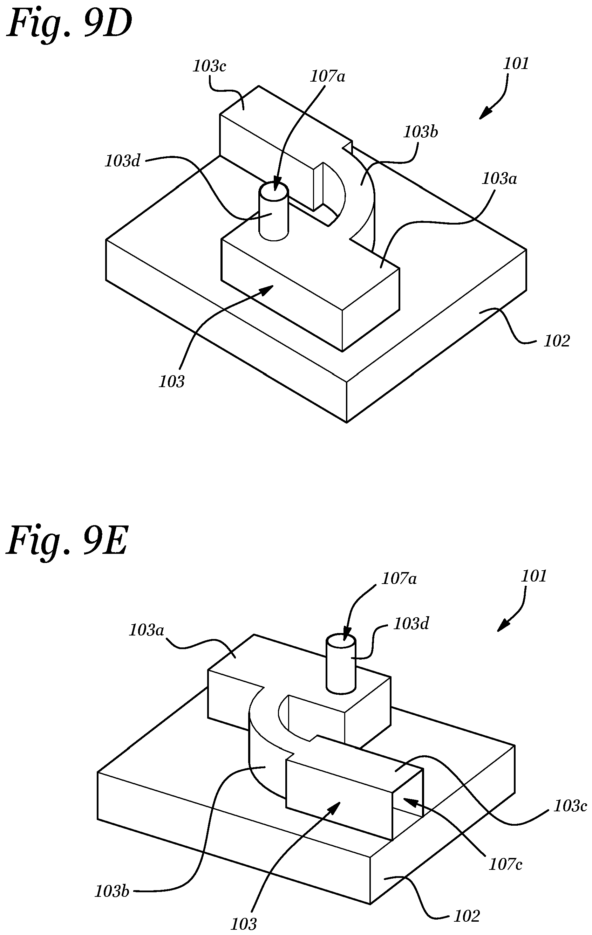

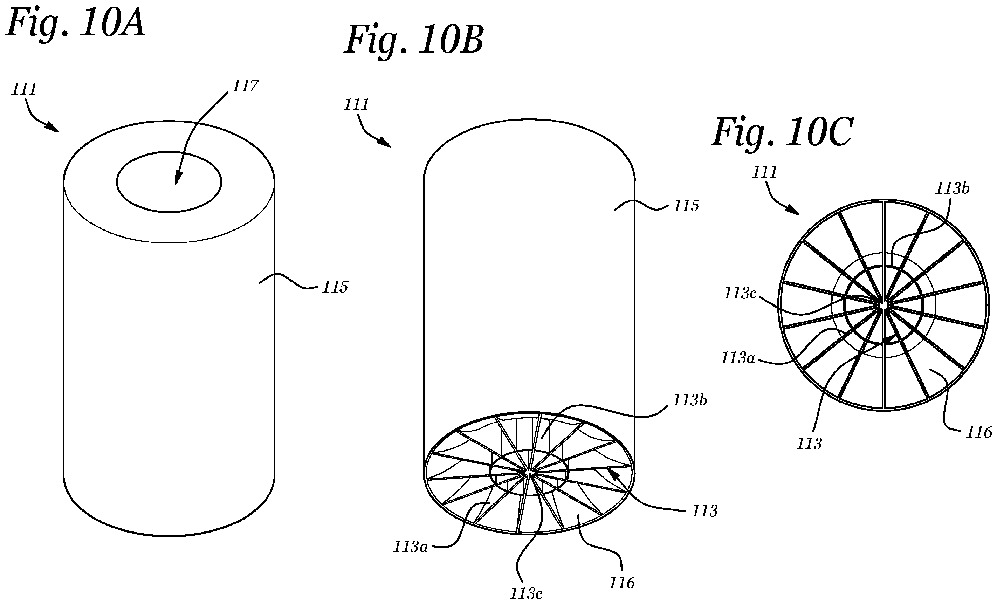

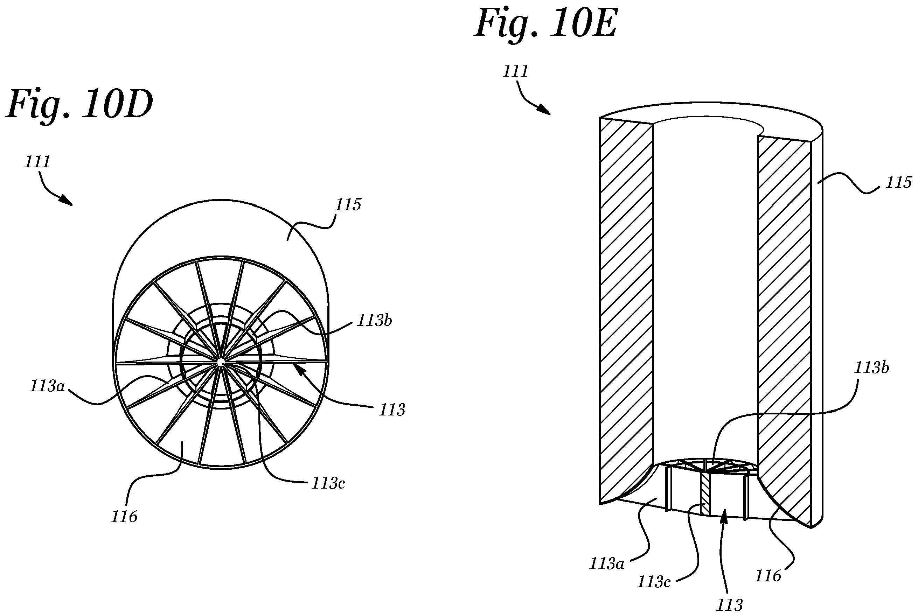

Example channel-related embodiments of the invention will be described with reference to Fig. 2A-2B, 3A-3B, 4A-4C, 5A-5C, 6A-6C, 7A-7C, 8A-8C, which are not intended to limit the scope of the invention in any way. Example embodiments of the invention will be described with reference to Fig. 9A-9E, 10A-10E, which are not intended to limit the scope of the invention in any way.

### Example 1: example of a device according to the invention

This example is described with reference to Fig. 2A-2B. In this example according to channel-related embodiments of the invention, the device 1 comprises a substrate 2, a wall 3 welded onto the substrate 2 thereby defining a channel 7, and a covering layer 5 extending over and covering the substrate 2 and the wall 3.

As can be seen in Fig. 2A-2B, the substrate 2 has a complex and non-uniform and/or non-planar shape, where different parts of the substrate 2 have varying thicknesses, and where its surface rises and falls like a landscape, featuring pronounced "hills" and a "valley". Furthermore, as shown in Fig. 2A, the substrate 2 has two holes extending from the bottom side 11 of the substrate 2 towards the top side of the substrate 2 on top of which the wall 3 is welded, thereby defining the inlet and outlet of the channel 7. These undulations introduce complexities in the manufacturing of the device, particularly of the wall and even more particularly the channel, which may require, in some cases, a hybrid and synergetic use of different additive manufacturing technologies, which area combined in an innovative way.

For the sake of simplicity, the covering layer 5 is shown as a transparent layer to show the complex pattern of the wall 3, as well as the channel 7. As shown in Fig. 2A, the wall 3 and the channel 7 are multi-directional and comprise a plurality of twists and turns. The channel 7 is shown to be conformal to the contour of the substrate 2.

As shown in Fig. 2B, the device 1 further comprises a groove 6 formed in the substrate 2 thereby further defining the channel 7 with the wall 2. The groove 6 is conformal to the contour of the substrate 2. The groove 6 allows the wall 3 to be flat and still defining the channel 7, since there is no need for additional space to be defined by the wall 3. Furthermore, this allows the wall 3 to be conformal to the contour of the substrate 2.

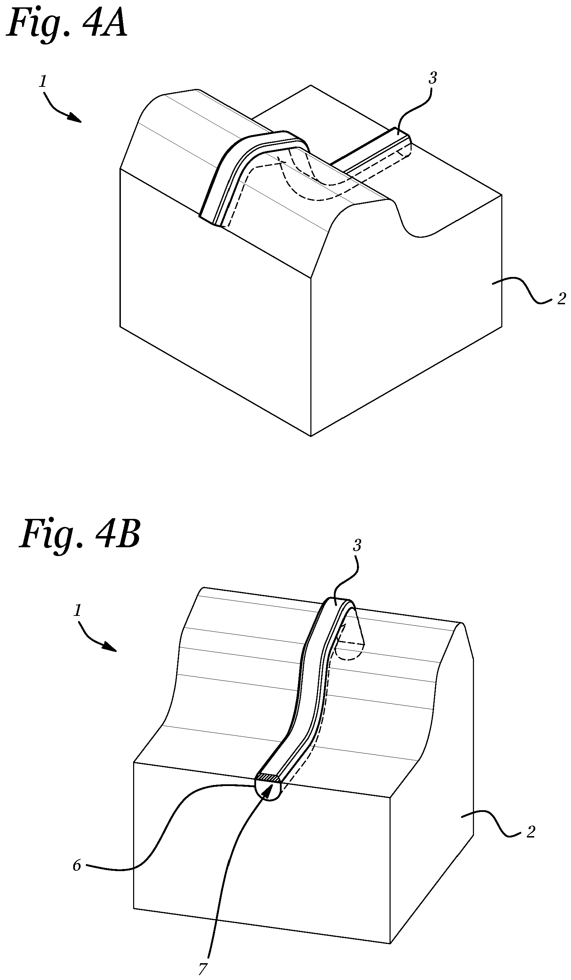

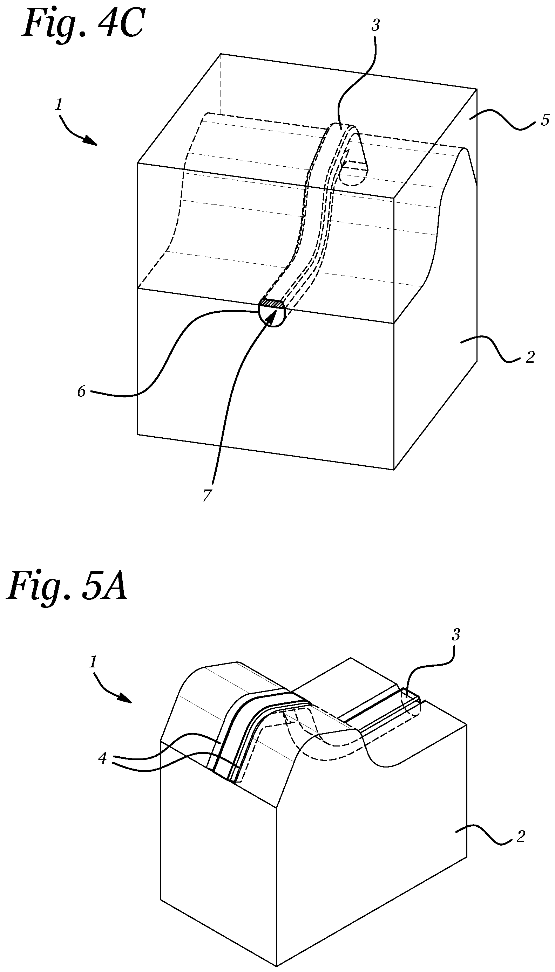

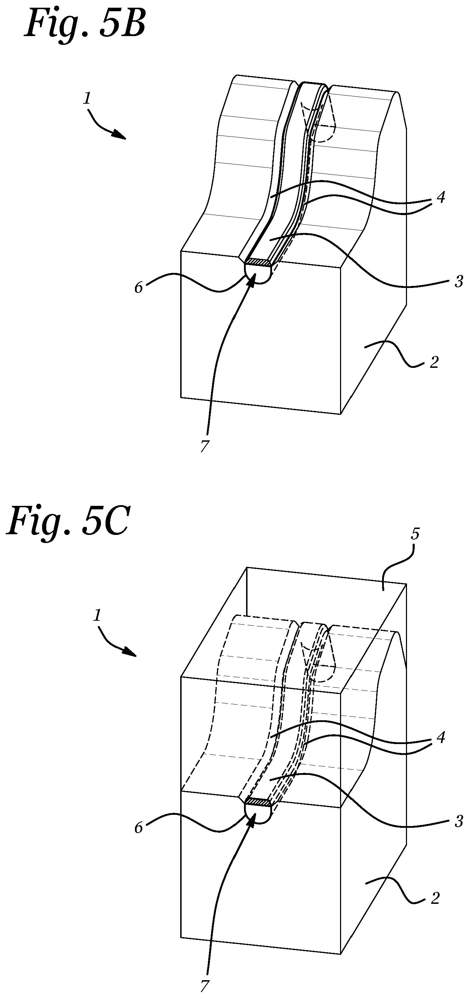

The inventors have found that by providing slots 4 on (the outer surface of) the substrate 2, shown adjacent to the wall 3 and/or the groove 6, the wall 3, particularly being flat, can be more effectively welded onto the substrate 2. The slots 4 provide a gap allowing for complete penetration of the weld into the wall 3, thereby providing a complete weld between the wall 3 and the substrate 2. This can allow the wall 3 to be flush with the outer surface of the substrate, thereby, requiring minimal post-processing. Therefore, the covering layer 5 can be more efficiently and effectively deposited onto and covering the substrate 2 and the wall 3 in a single additive manufacturing step. In this example, the covering layer 5 is deposited as an even layer covering the substrate 2, thereby following the contour of the substrate 2. As is shown in Fig. 2A-2B, the covering layer 5 continues the same complex and non-uniform shape. The slots 4 and the flat wall 3 are described in more detail with reference to Fig. 5A-5C below. Alternatively, the device 1 does not comprise slots 4; such a channel-related embodiment is described in more detail with reference Fig. 4A-4C below.

As shown in Fig. 2A, the wall 3, the slots 4, the groove 6, and the channel 7 extend along a plurality of directions and for a plurality of lengths. For example, a first portion of the wall 3, the slots 4, the groove 6, and the channel 7 extends along the length of the substrate 2 for the longest distance. In another example, a second portion of the wall 3, the slots 4, the groove 6, and the channel 7 extends along the width of the substrate 2 for almost half the width of the substrate 2. Here, the wall 3, the slots 4, the groove 6, and the channel 7 are multi-directional comprising a plurality of twists and turns, provided in/on different thickness of the substrate. This is a particularly complex pattern of the wall 3, the slots 4, the groove 6, and the channel 7 since portions of the wall 3 and the channel 7 extend in a first direction, and second portions of the wall 3, the slots 4, the groove 6, and the channel 7 extend in a second direction opposite to the first direction, wherein in both first and second directions (e.g., along the length of the substrate 2), the wall 3, the slots 4, the groove 6, and the channel 7 are multi-directional comprising twists and turns and are conformal to the contour of the substrate 2. In this example, the wall 3, the slots 4, the groove 6, and the channel 7 further extend in a third direction and a fourth direction (e.g., along the width of the substrate 2). To add to the complexity, portions of the wall 3, the slots 4, the groove 6, and the channel 7 are further provided in close proximity of each other, for providing, e.g., more homogeneous cooling or heating of a mold, which can be difficult or even not possible to manufacture by the method of the prior art, while ensuring the robustness and effective welding of the components of the device.

### Example 2: example of a device according to the invention

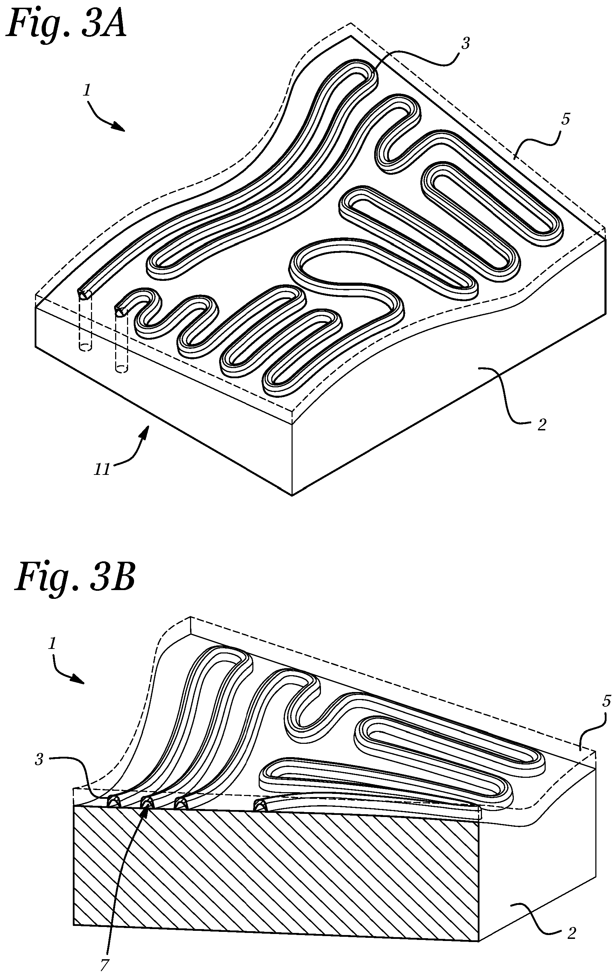

This example is described with reference to Fig. 3A-3B. This example describes a device 1 which corresponds in many aspects and/or features to the device 1 in Example 1 described with reference to Fig. 2A-2B, however here, the device 1 of Fig. 3A-3B does not comprise the groove 6 and the slots 4 of Fig. 2A-2B. Furthermore, in this example according to channel-related embodiments of the invention, the wall 3 is curved and welded onto the substrate 2 defining a channel.

In this example, the covering layer 5 is deposited over and covering the substrate 2 and the wall 3. Here, the single additive manufacturing step takes into account the dimensions of the wall 3 to deposit less material of the covering layer 5 on the wall 3 and more of said material on the other parts of the substrate 2. This may allow to deposit the covering layer 5, covering the substrate 2 and following the contour of the substrate 2. As is shown in Fig. 3A-3B, the covering layer 5 continues the same complex and non-uniform shape. The curved wall 3 is described in more detail with reference to Fig. 6A-6C below.

### Example 3: example of a device according to the invention

This example is described with reference to Fig. 4A-4C. In this example, the device 1 may be that of Fig. 2A-2B (excluding the slots 4). In this example according to channel-related embodiments of the invention, the device 1 comprises a groove 6 formed within the substrate 2 and a wall 3 welded onto the substrate 2, such that the wall 3 and the groove 6 are contiguous or opposite/facing each other. Thereby the channel 7 is defined between the groove 6 and the wall 3.

In this example, the groove 6 is conformal to the contour of the substrate 2. The groove 6 is large enough such that it allows the wall 3 to be flat, since there is no need for additional space to be defined by the wall 3. Furthermore, this allows the wall 3 to be conformal to the contour of the substrate 2.

As shown in Fig. 4B-4C, the edges of the wall 3 taper allowing for improved welding of the wall 3, particularly the edges of the wall to the substrate 2.

The device 1 comprises a covering layer 5 which is integrally formed, i.e., deposited by means of a single additive manufacturing step. As is shown in Fig. 4C, the covering layer 5 covers the substrate 2 and the wall 3, but does not necessarily continue the same complex and non-uniform shape. For instance, at higher thicknesses of the substrate 2, less material of the covering layer 5 is deposited compared to lower thicknesses of the substrate 2. This is shown as a flat outer surface of the covering layer in Fig. 4C. However, the covering layer 5 may have any possible shape taking into account the thicknesses of the substrate 2 and the dimensions of the wall 3.

### Example 4: example of a device according to the invention

This example is described with reference to Fig. 5A-5C. In this example, the device 1 may be that of Fig. 2A-2B (including the slots 4). This example describes a device 1 which corresponds in many aspects and/or features to the device 1 in Example 3 described with reference to Fig. 4A-4C, however here, the difference is that the device 1 further comprises slots 4.

The inventors have found that by providing slots 4 on (the outer surface of) the substrate 2, shown adjacent to the wall 3 and/or the groove 6, the wall 3, particularly being flat, can be more effectively welded onto the substrate 2. The slots 4 provide a gap allowing for complete penetration of the weld into the wall 3, thereby providing a complete weld between the wall 3 and the substrate 2. This can allow the wall 3 to be flush with the outer surface of the substrate, thereby, requiring minimal post-processing. Therefore, the covering layer 5 can be more efficiently and effectively deposited onto and covering the substrate 2 and the wall 3 in a single additive manufacturing step. In this example, the covering layer 5 covers the substrate 2 and the wall 3, but does not necessarily continue the same complex and non-uniform shape. For instance, at higher thicknesses of the substrate 2, less material of the covering layer 5 is deposited compared to lower thicknesses of the substrate 2. This is shown as a flat outer surface of the covering layer in Fig. 5C. However, the covering layer 5 may have any possible shape taking into account the thicknesses of the substrate 2 and the dimensions of the wall 3.

As can be seen in Fig. 5A-5C, the substrate has a complex and non-uniform shape, where its surface rises and falls like a landscape, featuring a more pronounced "hill" and "valley". These undulations introduce complexities in the manufacturing of the device, particularly of the wall and the channel, which may require, in some cases, a hybrid and synergetic use of different additive manufacturing technologies, which area combined in an innovative way.

### Example 5: example of a device according to the invention

This example is described with reference to Fig. 6A-6C. In this example, the device 1 may be that of Fig. 3A-3B. This example describes a device 1 which corresponds in many aspects and/or features to the device 1 in Example 3 described with reference to Fig. 4A-4C, however here, the difference is that the wall 3 comprised in the device 1 is curved.

As shown in Fig. 6B-6C, the wall 3 comprises two legs 3a wherein each leg 3a comprises a foot welded onto the substrate 2. In this example, each leg 3a comprises a section which tapers towards the respective foot. Fig. 6B-6C show the tapering at the inner surface of each leg 3a. This may advantageously allow for weld penetration, i.e., the welding penetrating through the foot, which improves the welding of the wall, particularly the foot onto the substrate, e.g., preventing the burning of the weld material and/or the foot, and ensures the robustness of the welding, e.g., such reduced fatigue and cracks. Furthermore, the tapering may also increase the dimensions of the channel while ensuring the rigidity and structural integrity of the wall.

### Example 6: example of a device according to the invention

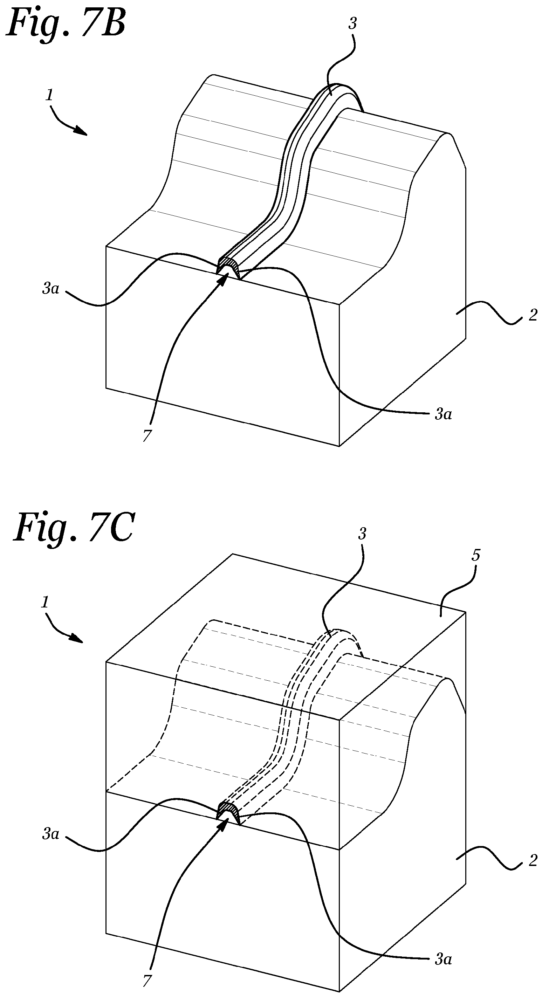

This example is described with reference to Fig. 7A-7C. In this example, the device 1 may be that of Fig. 3A-3B. This example describes a device 1 which corresponds in many aspects and/or features to the device 1 in Example 5 described with reference to Fig. 6A-6C, however here, the difference is that the device 1 does not comprise the groove 6 of Fig. 6A-6C.

In this example, the channel 7 is defined by the attaching, e.g., welding, of the wall 3 onto the substrate 2. This shows that the cross-sectional shape of the wall 3, being a curved wall with two legs, allows to define the channel 2, without the need for a groove to be made. This reduces the number of steps needed to define the channel 7.

### Example 7: example of a device according to the invention

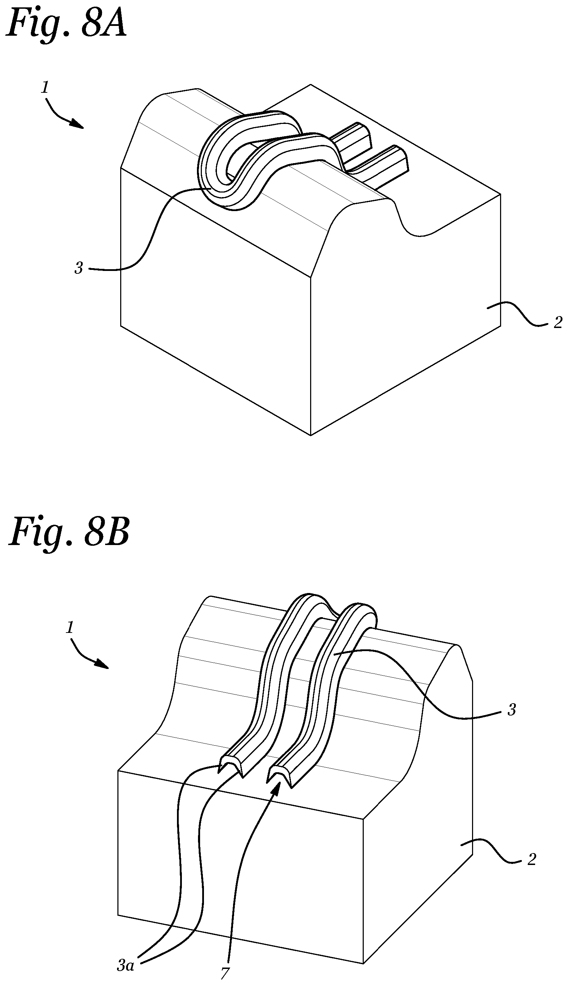

This example is described with reference to Fig. 8A-8C. In this example, the device 1 may be that of Fig. 3A-3B. This example describes a device 1 which corresponds in many aspects and/or features to the device 1 in Example 6 described with reference to Fig. 7A-7C, however here, the difference is that the wall 3 and the channel 7 show more pronounced extension along is multiple directions and having more pronounced twists and turns. This is a particularly complex pattern of the wall 3 and the channel 7 since a first portion of the wall 3 and the channel 7 extends in a first direction, and a second portion of the wall 3 and the channel 7 extends in a second direction opposite to the first direction, wherein in both first and second directions, the wall 3 and the channel 7 are multi-directional comprising twists and turns and are conformal to the contour of the substrate 2.

The devices in Examples 3-6 may comprise a similar complex pattern of at least the wall 3 and the channel 7, and in some cases also of the groove 6 and/or of the slots 4.

### Example 8: example of a device according to the invention

This example is described with reference to Fig. 9A-9E. In this example according to embodiments of the invention, the device 101 comprises a substrate 102, a support structure 103 welded onto the substrate 102 thereby defining one or more cavities, and an additive manufacturing layer 105 extending over and covering the substrate 102 and the support structure 103. In channel-related embodiments, the one or more cavities form one or more channels 107a-107c.

As will be described in more detail below, the support structure 103 comprises a plurality of support structures: a first support structure 103a, a second support structure 103b, and a third support structure 103c. In this example, the support structure 103 may further comprise a fourth support structure 103d. In this example, the support structures 103a-103c are welded onto the substrate 102. In this example relating to channel-related embodiments, the one or more cavities may define a single channel, i.e., defined by the cavities formed by the welding of the support structures 103a-103c onto the substrate 102. The single channel may be further defined by the welding of the fourth support structure 103d onto the first support structure 103a, or by the drilling into the additive manufacturing layer 105, or by printing the additive manufacturing layer 105 thereby defining a cavity. Thus, the interconnection of the cavities, formed by the support structures 103a-103c and the substrate 102 and by the fourth support structure 103d or the cavity formed in the additive manufacturing layer 105, may define the single channel.

The support structure 103 may be printed in a single printing step or each of the support structure 103a-130c (and optionally 103d) may be printed separately and interconnected, i.e., welded to each other. Additionally or alternatively, the additive manufacturing 105 may be deposited by means of a single printing step.

Fig. 9A-9B show perspective views of the device 101 after the additive manufacturing layer 105 is deposited. In this example, the device 101 is a complex pneumatic valve housing. Fig. 9C shows a cross-section of the device 101 after the additive manufacturing layer 105 is deposited. Here, a first channel 107a may be defined by the cavity formed by the first support structure 103a and the additive manufacturing layer 105 in which a first cavity is drilled, as well as by the welding of the first support structure 103a onto the substrate. Alternatively, the first channel 107a may be defined by the first support structure 103a and the fourth support structure 103d, as well as by the welding of the first and second support structure 103a-103b onto the substrate. Alternatively, the first channel 107a may be defined by the welding of the first support structure 103a onto the substrate and the printing of the additive manufacturing layer 105 on top of the first support structure 103a forming the first cavity. Furthermore, a second channel 107b is defined by (the interconnection of) the first support structure 103a and the second support structure 103b.

Fig. 9D-9E show perspective views of the device 101 before the additive manufacturing layer 105 is deposited. It is shown that a third channel 107c is defined by the welding of the third support structure 103c onto the substrate 102. Thus, the interconnection of the channels 107a-107c may define the single channel.

In this example, the support structure 103 acts as a pneumatic valve housing, providing the required dimensions and complex shape for enclosing internal parts of the pneumatic valve. In this example, the additive manufacturing layer 105 acts as a protective barrier to the support structure 103 and the parts enclosed therein. The support structure 103 may increase the structural integrity of the additive manufacturing layer 105 deposited thereon.

As shown in Fig. 9D-9E, each of the support structures 103a-103d has a different shape and/or dimensions. For example, the first support structures 103a is a hollowed-out rectangular prism, the second support structure 103b is a hollowed-out curved rectangular prism, the third support structure 103c is a hollowed out square prism, and the fourth support structure 103d is a hollowed-out cylinder. For each of the first, second and third support structure 103a-103c, a base side of the respective prism is not comprised therein, thereby, the respective channel is defined by welding the sides of the first, second and third support structure 103a-103c standing on the support structure 102, particularly perpendicular thereto.

Furthermore, as shown in Fig. 9D-9E, the support structure 103 defines a plane. In this example, the support structures 103a-103c define a plane, wherein the support structures 103a-103c have the same height.

As is shown in this example, the support structure 103 has a complex shape which is fabricated using high-accuracy printing, while the additive manufacturing layer is deposited using high-deposition-rate printing, whereby the hybrid combination of the two printing technologies provides a synergetic effect of more accurately providing cavities which are interconnected forming a single channel for allowing the enclosure of the internal part of a pneumatic valve. Providing the plurality of support structures 103a-103c in close proximity to each other may allow to obtain such complex and accurate shapes fabricated within the device 101, which may be otherwise difficult to obtain with traditional methods. Furthermore, depositing the additive manufacturing layer 105 on the support structures 103a-103c and covering the support structures 103a-103c provides a more a cost-efficient way of obtaining said complex shapers in high quality.

In another example, the device 101 does not include channels 107a, 107c, such that the support structure 103 defines an enclosed cavity. Alternatively, or additionally, the device 101 may not include the channel 107b and a channel (not shown) in between the second and third support structures 103b, 103c, such that the plurality of structures 103a-103c are not open to each other, and such that the support structures 103a-103c define respective enclosed cavities. In such an example, the support structure may be fabricated with a high-accuracy additive manufacturing method which is not powder-based.

### Example 9: example of a device according to the invention

This example is described with reference to Fig. 10A-10E. In this example according to embodiments of the invention, the device 111 comprises a support structure 113 and an additive manufacturing layer 115 deposited on the support structure 113.

Fig. 10A-10B show perspective views of the device 111, being a hollow cylinder, wherein the additive manufacturing layer 115 is deposited on the support structure 113 thereby defining a channel 117, wherein an outer ring portion (i.e., the manufacturing layer 115) defines an open center cavity (i.e., the channel 117).

Fig. 10C-10D show the side of the device 111 wherein the support structure 113 is located. As is shown, the support structure 113 comprises a plurality of support structures: a first support structure 113a, a second support structure 113b, and a third support structure 113c. The first support structure 103a concerns a plurality of fins extending radially outward from the third support structure 103c, being the center of the support structure 103, and up to the perimeter of the support structure 113. The second support structure 113b being a concentric hollow cylinder defined within the perimeter of the support structure 113 and having a diameter less than the diameter of the device 111 or the support structure 113. The second support structure 113b may provide support to the first support structure 113a, e.g., to stiffen the plurality of fins in between the perimeter and the third support structure 113c.

Fig. 10E shows a cross-section of the device 111, wherein the support structure 113 may further comprise a ring portion 116.The (outer surface of the) ring portion 116 (gradually) tapers inward towards the center cavity 117. In this example, at the side of the first support structure 113 integral to or on top of which the additive manufacturing layer 115 is deposited, (the surface of) the first support structure 113a tapers inward toward the second support structure 113b and/or the third support structure 113c. Thus, in this example, the additive manufacturing layer 115 may be deposited on the ring portion 116, thereby allowing the additive manufacturing layer 115 to have a bottom surface which similarly (gradually) tapers inward toward the center cavity 117. The first to third support structures 113a-113c may increase the structural integrity of the ring portion 116.

Although not shown, the support structure 113 may be removed from the additive manufacturing layer 115, such as by pushing/pulling the support structure 113 and the additive manufacturing layer 115 away from each other. This may be more effective where the materials used in fabricating the support structure 113 and the additive manufacturing layer 115 are selected for this particular case, such as using copper for fabricating the support structure 113 and using stainless steel for fabricating the additive manufacturing layer 115.

### (End of Example 9)

Although the present invention has been described above with reference to certain embodiments thereof, it will be evident that various modifications and changes may be made to these embodiments without departing from the broader scope of the present invention, as defined by the appended claims.

## Claims

1. A welded manufacturing method comprising:
- providing a support structure (3; 103; 113);
- depositing an additive manufacturing layer (5; 105; 115) on the support structure (3; 103; 113),
wherein the step of providing a support structure (3; 103; 113) comprises fabricating the support structure (3; 103; 113) using a high-accuracy additive manufacturing technology, and
wherein the additive manufacturing layer (5; 105; 115) is deposited using a high-deposition-rate additive manufacturing technology.

2. The method according to claim 1, wherein the high-accuracy additive manufacturing technology concerns powder-based printing.

3. The method according to claim 1 or claim 2, wherein the high-deposition-rate additive manufacturing technology concerns directed energy deposition.

4. The method according to any one of claims 1-3, wherein the additive manufacturing layer (5; 105; 115) is deposited by means of a single high-deposition-rate additive manufacturing step.

5. The method according to any one of claims 1-4, further comprising removing the support structure (113), wherein the support structure (113) is fabricated with a material having low miscibility.

6. The method according to any one of claims 1-5, wherein the support structure comprises a plurality of support structures (103a-103d; 113a-113c) each of which having a different shape.

7. The method according to claim 6, wherein the step of providing the support structure comprises interconnecting the plurality of support structures (103a-103d; 113a-113c) sequentially.

8. The method according to claim 7, wherein the support structures (103a-103d; 113a-113c) define a plane.

9. The method according to any one of claims 1-8, wherein the support structure (113) comprises a plurality of openings, wherein the openings are multi-directional.

10. The method according to claim 9, wherein a ratio of a volume of the plurality of openings to a volume of a material in the support structure (113) is at least 1.5:1, preferably at least 2:1.

11. The method according to any one of claims 1-10, further comprising welding the support structure (3; 103) onto a substrate (2; 102).

12. The method according to claim 11, wherein the additive manufacturing layer (5; 105; 115) covers at least the support structure (3; 103; 113).

13. The method according to claim 11 or claim 12, wherein the welding of the support structure (3; 103) to the substrate (2; 102) defines one or more channels (7; 107a-107c).

14. The method according to claim 13, wherein the depositing of the additive manufacturing layer (5; 105; 115) defines further one or more channels (107a; 117).

15. A device (1; 101; 111) obtainable by the method of any one of claims 1-14.
